# EUROPÄISCHE PATENTSCHRIFT

(11) **EP 1 609 552 B1**
(45) Veröffentlichungstag und Bekanntmachung des Hinweises auf die Patenterteilung: **17.02.2010**
(21) Anmeldenummer: 05102233.3
(22) Anmeldetag: 21.03.2005
(51) Int. Cl.: B23H 9/00, F02M 61/16

(54) **Verfahren zur Herstellung eines Ventilkörpers für ein Kraftstoffventil**
Method for manufacturing a fuel injector valve body
Méthode de fabrication d'un corps d'injecteur.

(30) Priorität: 25.06.2004 DE 102004030762
(43) Veröffentlichungstag der Anmeldung: 28.12.2005
(73) Patentinhaber: ROBERT BOSCH GMBH, 70442 Stuttgart (DE)
(72) Erfinder: Glock, Armin, 73660, Urbach (DE); Hackenberg, Juergen, 74343, Sachsenheim (DE)

(56) Entgegenhaltungen:
- EP-A- 0 425 236
- DE-A1- 10 042 612
- US-A- 4 639 568
- US-A- 5 833 835

## Beschreibung

### Stand der Technik

Die Erfindung geht aus von einem Verfahren zur Herstellung eines Ventilkörpers für ein Kraftstoffventil, insbesondere für ein Kraftstoff-Einspritzventil, der mindestens einen eine Austrittsöffnung für den Kraftstoff umschließenden, auf einer Wandfläche des Ventilkörpers ausgebildeten Ventilsitz aufweist.

Das Dokument US 4,639,568 A, welches als nächstliegender Stand der Technik anzusehen ist, zeigt ein derartiges Verfahren.

Bei einem bekannten Verfahren zur Herstellung eines Ventilkörpers mit Ventilsitz für ein Kraftstoff-Einspritzventil (DE 197 57 117 A1) kommen unterschiedliche mechanische Bearbeitungswerkzeuge zum Einsatz, mit denen an Abschnitten des Ventilkörpers zur Führung eines axial beweglichen Ventilglieds und zur Ausbildung von Ventilsitzen zeitlich getrennt eine Feinbearbeitung durchgeführt wird. Dabei wird zunächst ein Ventilkörper mit zylindrischer Außenkontur hergestellt, in dem eine Durchgangsbohrung mit einer Einström-, einem Führungs- und einem Ventilsitzbereich eingearbeitet wird, wobei die Konturen der Bereiche durch entsprechendes Urformen und Massivumformen, wie Kaltverformen oder Kaltpressen, erzeugt werden. Anschließend wird eine Feinbearbeitung des Ventilsitzabschnitts und des Führungsabschnitts mittels einer harten Masterkugel durchgeführt, wobei die Feinbearbeitung durch Honen, Feinschleifen oder Läppen mit Honölen, Schleifpasten oder Läpppasten erreicht wird.

Bei Kraftstoffventilen mit mehreren Spritzlöchern, z.B. Sitzlochdüsen oder Mehrlochventilen, wird anstelle der Durchgangsbohrung eine Sacklochbohrung in den Ventilkörper eingebracht, die über den Ventilsitzbereich hinaus in den Ventilkörper eingesenkt wird, um eine Werkzeugauslaufzone für das den Ventilsitzbereich bearbeitende Feinbearbeitungswerkzeug zu schaffen. Eine solche Werkzeugauslaufzone stellt im Betrieb des Kraftstoffventils ein großes Totvolumen dar, das zur Folge hat, dass Kraftstoff, der das Totvolumen ausfüllt, bei geschlossenem Ventil unkontrolliert aus den Austrittsöffnungen oder Spritzlöchern in der Kammerwand ausströmen kann. Dies führt wiederum zur Erhöhung der Kohlenwasserstoff-Emissionen des Verbrennungsmotors und zur Ablagerung von Verbrennungsruckständen in den Spritzlöchern und im Totvolumen, was als sog. Verkokung bezeichnet wird.

Aus der US 4,639,568 A ist bereits ein Verfahren zur Herstellung eines Ventilkörpers für ein Kraftstoffventil, insbesondere für ein Kraftstoff-Einspritzventil, bekannt, der mindestens eine Austrittsöffnung für den Kraftstoff umfasst und einen auf einer Wandfläche des Ventilkörpers ausgebildeten Ventilsitz aufweist. Die Wandfläche mit Ventilsitz wird dabei grobkonturig in dem Ventilkörper ausgearbeitet. In den vorbearbeiteten Ventilkörper wird der Werkzeugkopf eines Werkzeugs mit einer der gewünschten Endkontur von Wandfläche und Ventilsitz nachgebildeten Kopfoberfläche eingesenkt. Dies geschieht mittels Funkenerosion, nämlich dem EDM (Electrical Discharge Machining)-Verfahren.

### Vorteile der Erfindung

Das im Anspruch 1 dargestellte erfindungsgemaße verfahren zur Herstellung eines Ventilkörpers für ein Kraftstoffventil hat den Vorteil, dass an dem Werkzeugkopf nachgebildete Konturen sich im µm-Bereich mit einem einzigen Prozessschritt berührungsfrei auf die Wandfläche des Ventilkörpers und den Ventilsitz des Ventilkörpers übertragen lassen, sozusagen auf Ventilsitz und Wandfläche abgebildet werden. Durch entsprechendes Formen der Oberfläche des Werkzeugkopfes lassen sich gewünschte Konturen der Ventilsitze hochgenau mit sehr guter Qualität herstellen, ohne dass im Ventilkörper eine Werkzeugsauslaufzone vorgehalten werden muss. Durch Wegfall dieser Werkzeugauslaufzone besitzt der Ventilkörper ein minimales Totvolumen, wodurch die vorgenannten, nachteiligen Erscheinungen im Betrieb des Krafkstoffventils, wie größere HC-Emissionsraten und Verkokung, vermieden werden.

Beim Fertigungsprozess unterliegt der als Elektrode ausgesetzte Werkzeugkopf - anders als die bekannten Bearbeitungswerkzeuge - keinerlei Verschleiß, da er nicht mit dem Ventilkörper in Berührung kommt und im elektrochemischen Elektrolyseprozess Material ausschließlich vom Ventilkörper abgetragen wird. Ebensowenig wie eine Werkzeugauslaufzone sind beim Fertigungsprozess Zentrierhilfen für den Werkzeugkopf erforderlich. Die Oberflächen von Ventilkörperwand und Ventilsitz werden in polierter Qualität erhalten.

Durch entsprechende Ausbildung der Form des Werkzeugkopfes können zusätzlich gewünschte Strukturen auf den Ventilkörper übertragen werden, so z.B. axial verlaufende Kraflstoffaustrittskanäle oder strömungsgebende Strukturen zur Verbesserung der Ventildynamik. Diese Strukturen werden in dem gleichen Arbeitsschritt wie die Herstellung der Ventilsitze realisiert.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer bevorzugten Ausführungsform der Erfindung wird der elektrochemische Materialabtragungsprozess in einem unter der Bezeichnung ECM-Verfahren (electrochemical machining) bekannten Elektrolyseprozess durchgeführt. Dabei wird der Werkzeugkopf als Katode und der Ventilkörper als Anode betrieben und als Spannungsquelle ein Pulsgenerator eingesetzt. Durch einen Arbeitsspalt zwischen der Kopfoberfläche des Werkzeugkopfes und der den mindestens einen Ventilsitz tragenden Wandfläche des Ventilkörpers vorhanden ist, wird ein Elektrolytstrom hindurchgeführt.

Einzelheiten des ECM-Verfahrens sind beschrieben in Zaitsev, Belogorsky u.a. "Performig Holes of Small Diameter in Steel Foil Using Methode of Multi-Electrode Precise Electrochemical Machining", VDI-Berichte Nr. 1405, 1998, Seite 555 bis 564.

### Zeichnung

Die Erfindung ist anhand eines in den Zeichnungen 3 und 4 dargestellten Ausführungsbeispiels in der nachfolgenden Beschreibung näher erläutert. Es zeigen:
Fig. 1 ein Blockschaltbild einer Vorrichtung zur Durchführung eines Verfahrens zur Herstellung eines Ventilkörpers für ein Kraftstoffventil,
Fig. 2 ausschnittweise eine vergrößerte Schnittdarstellung von Ventilkörper und Werkzeugkopf in Fig. 1,
Fig. 3 ausschnittweise den endbearbeiteten Ventilkörper gemäß Fig. 2 in Verbindung mit einem mit dem Ventilkörper zusammenwirkenden Ventilschließglied des Kraftstoffventils im Längsschnitt,
Fig. 4 ausschnittweise eine Schnittdarstellung von Ventilkörper und Werkzeugkopf gemäß einem Ausführungsbeispiel der Erfindung.
Fig. 5 ausschnittweise den endgefertigten Ventilkörper gemäß Fig. 4 in Verbindung mit einem mit dem Ventilkörper zusammenwirkenden Ventilschließglied des Kraftstoffventils im Längsschnitt.

### Beschreibung des Ausführungsbeispiels

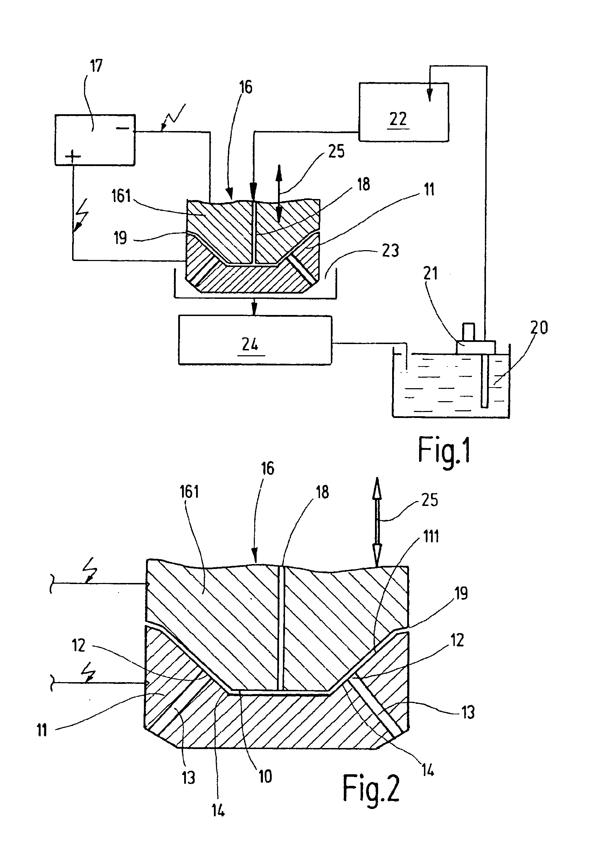

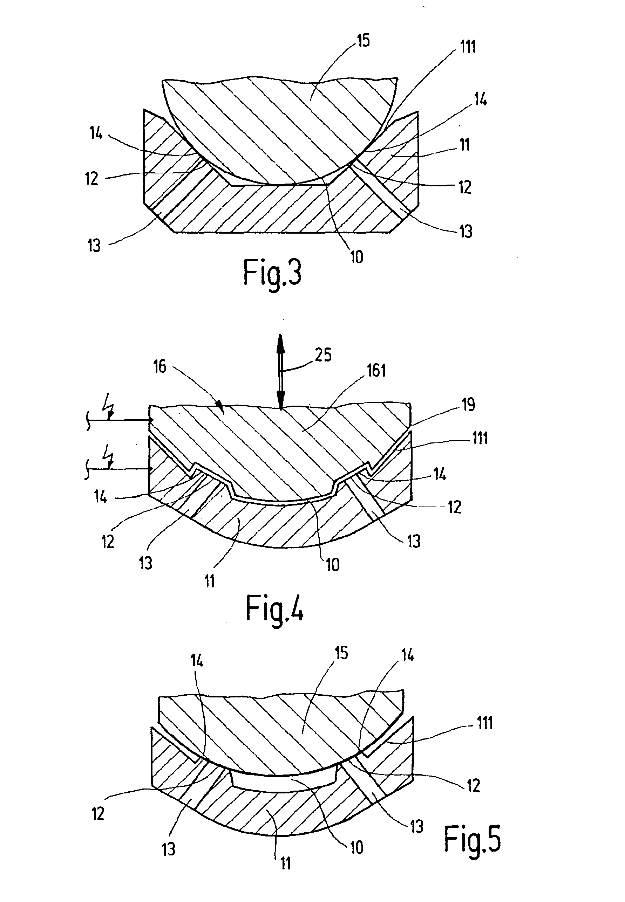

Das Verfahren zur Herstellung eines Ventilkörpers 11 für ein Kraftstoffventil, insbesondere für ein Kraftstoff-Einspritzventil für Verbrennungsmotoren oder Brennkraftmaschinen, ist nachfolgend anhand einer in Fig. 1 im Blockschaltbild dargestellten Vorrichtung beschrieben. Ein solcher Ventilkörper 11 z.B. eines Mehrlochventils oder einer Sitzlochdüse weist mehrere, in einer Wandfläche 111 des Ventilkörpers 11 liegende, üblicherweise als Spritzlöcher bezeichnete Austrittsöffnungen 12 für den Kraftstoff auf, welche die Einlässe von durch den Ventilkörper 11 hindurchgeführten Spritzkanälen 13 bilden. Jede Austrittsöffnung 12 ist von einem Ventilsitz 14 umschlossen, der auf der Wandfläche 111 des Ventilkörpers 11 ausgeformt ist. Wie in der Schnittdarstellung der Fig. 3 zu sehen ist, taucht in den Ventilkörper 11 ein Ventilschließglied 15 ein, das mit den Ventilsitzen 14 zum Schließen und Freigeben der Austrittsöffnungen 12 bzw. Spritzkanäle 13 zusammenwirkt, wobei das Ventilschließglied 15 mit Linienberührung oder sehr schmaler Flächenberührung an den Ventilsitzen 14 die Austrittsöffnungen 12 gegenüber dem Kraftstoffzufluss abdichtet.

Ziel des Verfahrens ist es, einerseits einen Ventilsitz mit polierter Oberflächenqualität herzustellen und andererseits im Ventilkörper 11 Totvolumen zu vermeiden, aus denen auch bei geschlossenem Ventil Kraftstoff über die Spritzkanäle 13 ausströmen kann.

Bei dem hier vorgestellten Verfahren wird zunächst der Ventilkörper 11 mit Spritzkanälen 13 und grobkonturig geformter Wandfläche 111 mit den daran grobkonturig ausgeformten Ventilsitzen 14 vorgefertigt. Die gewünschte Endkontur der Wandfläche 111 und der die Austrittsöffnungen 12 der Spritzkanäle 13 umschließenden Ventilsitze 14 wird auf der Kopfoberfläche des Werkzeugkopfes 161 eines Werkzeugs 16 hochgenau nachgebildet. Das Werkzeug 16 wird mit seinem Werkzeugkopf 161 in den Ventilkörper 11 eingesenkt, und Werkzeugkopf 161 und Ventilkörper 11 werden als Elektroden in einem elektrochemischen Materialabtragungsprozess betrieben, in dessen Verlauf die Kontur der Oberfläche des Werkzeugkopfes 161 hochgenau auf der Wandfläche 111 des Ventilkörpers 11 abgebildet wird.

Der elektrochemische Materialabtragungsprozess ist bekannt und wird als sog. ECM-Verfahren (Pulse unipolar electrochemical machining) zur Herstellung von Löchern mit kleinem Durchmesser bereits eingesetzt. Wie in Fig. 1 dargestellt ist, wird bei dem elektrochemischen Materialabtragungsprozess der Werkzeugkopf 161 als Katode und der Ventilkörper 10 als Anode im elektrischen Pulsbetrieb betrieben, wozu der Werkzeugkopf 161 an den Minuspol und der Ventilkörper 10 an den Pluspol eines Pulsgenerators 17 angeschlossen ist. Über eine zentrale Bohrung 18 im Werkzeugkopf 161 wird einem zwischen dem Ventilkörper 10 und der Oberfläche des Werkzeugkopfes 161 sich bildenden Arbeitsspalt 19 ein Elektrolyt zugeführt. Der Elektrolyt wird einem Vorratsbehälter 20 mittels einer Pumpe 21 entnommen und einer Stabilisierungskammer 22 für den Elektrolytstrom zugeführt, an der die zentrale Bohrung 18 im Werkzeugkopf 161 angeschlossen ist. Der dem Arbeitsspalt 19 zugeführte Elektrolyt fließt über die Spritzkanäle 13 und die Ränder des Arbeitsspaltes 19 ab und wird in einem Sammelbehälter 23 aufgefangen. Von dort gelangt der Elektrolyt in einen Regenerator 24, in dem auch das vom Ventilkörper 10 abgetragene Material ausgefiltert wird, und wird schließlich wieder dem Vorratsbehälter 20 zugeführt. Während des elektrochemischen Prozesses führt der Werkzeugkopf 161 eine mechanische Vibrationsbewegung in Achsrichtung aus, was durch den Doppelpfeil 25 in Fig. 1 angedeutet ist.

In Fig. 2 ist der Ventilkörper 10 mit dem während des elektrochemischen Prozesses in den Ventilkörper 11 eingesenkten Werkzeugkopf 161 im Längsschnitt vergrößert dargestellt. Die Wandfläche 111 des Ventilkörpers 11 ist schon sehr weit abgetragen und hat die Kontur der Oberfläche des Werkzeugkopfes 161 angenommen. In Fig. 3 ist der gemäß Fig. 2 hergestellte Ventilkörper 11 in Verbindung mit einem mit den Ventilsitzen 14 zusammenwirkenden Ventilschließglied 15 im Längsschnitt dargestellt. Deutlich ist zu sehen, dass durch die hochgenau nachgebildeten Ventilsitze 14 an der Wandfläche 111 die Austrittsöffnungen 12 nicht nur gegen den von oben zuströmenden Kraftstoff abgedichtet sind, sondern auch weitgehend gegenüber dem unterhalb des Ventilschließgliedes 15 in dem Ventilkörper 11 nur noch minimal vorhandenen Totvolumen 10 abgeschlossen sind, so dass in der Schließstellung des Ventils Kraftstoff nicht oder nur in minimalem Umfang aus dem Totvolumen 10 innerhalb des Ventilkörpers 11 über die Spritzkanäle 13 in den Brennraum des Verbrennungsmotors abströmen kann.

Das beschriebenen Verfahren lässt auch die Ausbildung von komplizierten Ventilsitzformen zu, die mit herkömmlichen Bearbeitungswerkzeugen und den bisher bekannten mechanischen Bearbeitungsmethoden nicht erreichbar sind. Eine solche Form des Ventilsitzes 14 auf der Wandfläche 111 des Ventilkörpers 11, die mit Hilfe einer sozusagen als Negativ entsprechend nachgebildeten Kontur auf der Oberfläche des Werkzeugkopfes 161 wie beschrieben hergestellt wird, ist in der Schnittdarstellung der Fig. 4 zu sehen. Die beiden jeweils eine Ventilöffnung 13 umschließenden Ventilsitze 14 sind gegenüber der Wandfläche 111 des Ventilkörpers 11 erhaben ausgebildet, stehen also über die Wandfläche 111 vor.

In Fig. 5 ist der gemäß Fig. 4 hergestellte Ventilkörper 11 mit darin eingesetztem, mit den Ventilsitzen 14 zusammenwirkendem Ventilschließglied 15 dargestellt. Deutlich ist zu sehen, dass bei dieser Ventilsitzform die Austrittsöffnungen 12 zu den Spritzkanälen 13 bei geschlossenem Ventil auch vollständig gegenüber dem noch verbleibenden Totvolumen 10 unterhalb des Ventilschließglieds 15 abgedichtet sind, so dass der dort vorhandene Kraftstoff nicht in die Austrittsöffnungen 12 gelangen kann. Der Abfluss von Kraftstoff über die Spritzkanäle 13 in den Brennraum des Verbrennungsmotors ist zuverlässig verhindert.

## Patentansprüche

1. Verfahren zur Herstellung eines Ventilkörpers (10) für ein Kraftstoffventil, insbesondere für ein Kraftstoff-Einspritzventil, der mindestens eine Austrittsöffnung (12) für den Kraftstoff umfasst und einen auf einer Wandfläche (111) des Ventilkörpers (11) ausgebildeten Ventilsitz (14) aufweist, bei dem
- die Wandfläche (111) mit Ventilsitz (14) grobkonturig in dem Ventilkörper (11) ausgearbeitet wird,
- in den vorbearbeiteten Ventilkörper (11) der Werkzeugkopf (161) eines Werkzeugs (16) mit einer der gewünschten Endkontur von Wandfläche (111) und Ventilsitz (14) nachgebildeten Kopfoberfläche eingesenkt wird,
**dadurch gekennzeichnet,**
**dass** Werkzeugkopf (161) und Ventilkörper (11) als Elektroden in einem elektrochemischen Materialabtragungsprozess betrieben werden, wobei der Werkzeugkopf (161) an seiner Oberfläche derart mit einer Kontur versehen ist, dass durch die Bearbeitung gegenüber der Wandfläche (111) des Ventilkörpers (11) erhabene Ventilsitze (14) entstehen.

2. Verfahren nach Anspruch 1,
**dadurch gekennzeichnet,**
**dass** der Werkzeugkopf (161) als Katode und der Ventilkörper (10) als Anode betrieben und ein Elektrolytstrom durch einen zwischen Kopfoberfläche des Werkzeugskopfes (161) und der Wandfläche (111) des Ventilkörpers (11) sich bildenden Arbeitsspalt (19) hindurchgeführt wird.

3. Verfahren nach Anspruch 2,
**dadurch gekennzeichnet,**
**dass** der Elektrolytstrom über eine Bohrung (18) in dem Werkzeugkopf (161) dem Arbeitsspalt (19) zugeführt und aus dem Arbeitsspalt (19), vorzugsweise über mindestens eine Austrittsöffnung (12) im Ventilkörper (11), wieder abgeführt wird.

4. Verfahren nach Anspruch 2 oder 3,
**dadurch gekennzeichnet,**
**dass** der Werkzeugkopf (161) und der Ventilkörper (10) an einem Pulsgenerator (17) angeschlossen werden und der Werkzeugkopf (161) und/oder der Ventilkörper (10) in eine mechanische Vibration in Achsrichtung versetzt werden.

5. Nach dem Verfahren gemäß einem der Ansprüche 1 - 4 hergestellter Ventilkörper (10), bei dem mindestens ein eine Austrittsöffnung (12) für den Kraftstoff umschließender Ventilsitz (14) gegenüber der ihn umgebenden Wandfläche (111) des Ventilkörpers (11) erhaben ausgebildet ist.

## Claims

1. Method for manufacturing a fuel valve body (10), in particular for a fuel injector valve which comprises at least one outlet opening (12) for the fuel and a valve seat (14) which is embodied on a wall face (111) of the valve body (11), in which method
- the wall face (111) with the valve seat (14) is formed with rough contours in the valve body (11),
- the tool head (161) of a tool (16) with a body surface which replicates the desired final contour of the wall surface (111) and valve seat (14) is sunk into the pre-machined valve body (11),
**characterized**
**in that** the tool head (161) and valve body (11) are operated as electrodes in an electrochemical material erosion process, wherein the tool head (161) is provided on its surface with a contour such that valve seats (14) which are raised in relation to the wall surface (111) of the valve body (11) are produced by the processing.

2. Method according to Claim 1,
**characterized**
**in that** the tool head (161) is operated as a cathode and the valve body (10) is operated as an anode, and an electrolyte current is conducted through a working gap (19) which is formed between the head surface of the tool head (161) and the wall face (111) of the valve body (11).

3. Method according to Claim 2,
**characterized**
**in that** the electrolyte current is fed to the working gap (19) via a bore (18) in the tool head (161), and is conducted out of the working gap (19) again, preferably via at least one outlet opening (12) in the valve body (11).

4. Method according to Claim 2 or 3,
**characterized**
**in that** the tool head (161) and the valve body (10) are connected to a pulse generator (17), and the tool head (161) and/or the valve body (10) are made to vibrate mechanically in the axial direction.

5. Valve body (10) manufactured in accordance with the method according to one of Claims 1-4, in which at least one valve seat (14) which surrounds an outlet opening (12) for the fuel is made raised with respect to the wall face (111), surrounding said valve seat (14), of the valve body (11).

## Revendications

1. Procédé de fabrication d'un corps de soupape (10) pour une soupape de carburant, notamment pour une soupape d'injection de carburant qui présente au moins une ouverture de sortie (12) pour le carburant, et un siège de soupape (14) réalisé sur une surface de paroi (111) du corps de soupape (11), dans lequel :
- la surface de paroi (111) est usinée avec le siège de soupape (14) avec un contour grossier dans le corps de soupape (11),
- dans le corps de soupape pré-usiné (11), est enfoncée la tête d'outil (161) d'un outil (16) avec une surface de tête reproduisant le contour d'extrémité souhaité de la surface de paroi (111) et du siège de soupape (14),
**caractérisé en ce que**
la tête d'outil (161) et le corps de soupape (11) sont utilisés comme électrodes dans un processus d'enlèvement de matériau électrochimique, la tête d'outil (161) étant pourvue sur sa surface d'un contour de telle sorte que des sièges de soupape (14) rehaussés par rapport à la surface de paroi (111) du corps de soupape (11) résultent de l'usinage.

2. Procédé selon la revendication 1,
**caractérisé en ce que**
la tête d'outil (161) est utilisée en tant que cathode et le corps de soupape (10) en tant qu'anode, et un flux d'électrolyte est guidé à travers une fente de travail (19) se formant entre la surface de tête de la tête d'outil (161) et la surface de paroi (111) du corps de soupape (11).

3. Procédé selon la revendication 2,
**caractérisé en ce que**
le flux d'électrolyte est acheminé par le biais d'un alésage (18) dans la tête d'outil (161) à la fente de travail (19) et est à nouveau évacué hors de la fente de travail (19), de préférence par le biais d'au moins une ouverture de sortie (12), dans le corps de soupape (11).

4. Procédé selon la revendication 2 ou 3,
**caractérisé en ce que**
la tête d'outil (161) et le corps de soupape (10) sont raccordés à un générateur d'impulsions (17) et la tête d'outil (161) et/ou le corps de soupape (10) sont amenés en mouvement de vibration mécanique dans la direction de l'axe.

5. Corps de soupape (10) fabriqué selon le procédé selon l'une quelconque des revendications 1 à 4, dans lequel au moins un siège de soupape (14) entourant une ouverture de sortie (12) pour le carburant est réalisé sous forme rehaussée par rapport à la surface de paroi (111) du corps de soupape (11) qui l'entoure.
